# EUROPÄISCHE PATENTANMELDUNG

(11) **EP 1 504 965 A2**
(43) Veröffentlichungstag der Anmeldung: **09.02.2005**
(21) Anmeldenummer: 04103725.0
(22) Anmeldetag: 03.08.2004
(51) Int. Cl.: B60R 16/02

(54) **Verfahren zur Ermittlung eines kritischen Fahrverhaltens**

(30) Priorität: 05.08.2003 DE 10335741
(71) Anmelder: Robert Bosch GmbH, 70442 Stuttgart 30 (DE)
(72) Erfinder: Koenig, Winfried, 76327, Pfinztal (DE); Engeln, Arnd, 72072, Tuebingen (DE); Placke, Lars, 30163, Hannover (DE); Ladstaetter, Ulrich, 71384, Weinstadt (DE)

(57) **Zusammenfassung**

Es wird ein Verfahren zur Ermittlung eines kritischen Fahrerverhaltens vorgeschlagen, bei dem eine von dem Fahrer vorgenommene Bedienung ausgewertet und mit einem gespeicherten Benutzerprofil derart verglichen wird, dass bei einer Abweichung der Bedienung von dem gespeicherten Benutzerprofil ein kritisches Fahrerverhalten ermittelt wird.

## Beschreibung

### Stand der Technik

Die Erfindung geht aus von einem Verfahren zur Ermittlung eines kritischen Fahrverhaltens nach der Gattung des Hauptanspruchs. Aus der DE 100 39 795 A1 ist bereits ein Verfahren zur Warnung eines Fahrers eines Fahrzeugs bekannt. Hierbei wird die Ausgabe von Warnungen in Abhängigkeit von der Aufmerksamkeit des Fahrers gesteuert. Somit wird vermieden, Warnungen vor kritischen Situationen an einen Fahrer auszugeben, wenn dieser eine Gefahr bereits wahrgenommen hat. Ferner wird vorgeschlagen, eine niedrige Aufmerksamkeit des Fahrers dann zu ermitteln, wenn ein vorgegebener Wert einer Bedienfrequenz eines Gerätes überschritten wird.

### Vorteile der Erfindung

Das erfmdungsgemäße Verfahren mit den Merkmalen des Hauptanspruchs hat demgegenüber den Vorteil, dass zur Ermittlung eines kritischen Fahrverhaltens nicht lediglich ein Vergleich mit einem vorgegebenen Wert, sondern mit einem Benutzerprofil eines Fahrers erfolgt. Unter dem Bedienverhalten des Fahrers ist die Häufigkeit einzelner Bedienaktionen, ihre Dynamik und ihre Wirkung, d.h. die Veränderungen, die die Einstellungen im Fahrzeug zur Folge haben, zu verstehen. Insbesondere werden Bedienungen von Fahrzeugkomponenten ausgewertet, bei denen eine Veränderung eine unmittelbare Auswirkung auf den Fahrer selbst hat, z.B. eine Klimafunktion, eine Sitzeinstellung oder eine Radioauswahl. Auffällig kann z.B. eine gewünschte, übermäßig hohe Temperatur im Fahrzeug oder auch das Öffnen eines Fensters bei einer relativ angenehmen Innentemperatur sein. Durch den Vergleich des Bedienverhaltens mit einem insbesondere fahrerspezifischen Benutzerprofil ist es möglich, ein kritisches Fahrverhalten eines Benutzers genauer zu bestimmen, als lediglich durch einen Vergleich mit einem vorgegebenen Wert. Zudem umfasst das Benutzerprofil eine Vielzahl von Kenngrößen, so dass es ermöglicht wird, nicht lediglich bei der Abweichung einer einzigen Kenngröße bereits ein kritisches Fahrverhalten zu ermitteln, sondern verschiedene Abweichungen für die Feststellung eines kritischen Fahrverhaltens kombiniert zu betrachten. Auch hierdurch wird die Genauigkeit erhöht, mit der ein kritisches Fahrverhalten bestimmt werden kann. Damit wird einerseits sichergestellt, dass ein Fahrer vor tatsächlich kritischen Fahrsituationen gewarnt wird, wenn er ein kritisches Fahrverhalten an den Tag legt. Andererseits werden unnötige Warnungen vermieden, so dass sich die Akzeptanz des Systems durch einen Benutzer erhöht.

Durch die in den Unteransprüchen aufgeführten Maßnahmen sind vorteilhafte Weiterbildungen und Verbesserungen des im Hauptanspruch angegebenen Verfahrens zur Ermittlung eines kritischen Fahrverhaltens möglich. Besonders vorteilhaft ist, eine Bedienhäufigkeit, eine Bedienungsauswahl und/oder Bediendynamik einer Bedienung eines Benutzers zur Bestimmung eines kritischen Fahrverhaltens auszuwerten und mit einem gespeicherten Benutzerprofil zu vergleichen. Denn eine gesteigerte Bedienhäufigkeit von Fahrzeugsystemen bzw. Fahrzeugfunktionen, insbesondere von Komfortfunktionen, wie z.B. der Sitzeinstellung, der Klimaregelung oder der Fenster- bzw. Schiebedachöffnung zeigt an, dass ein Fahrer sich in dem Fahrzeug unwohl fühlt, und versucht, eine möglichst komfortable Situation im Fahrzeug wieder herzustellen.

Auch eine außergewöhnliche Bedienungsauswahl, wie z.B. Fenster geöffnet, Klimaregelung besonders kalt und/oder Autoradio besonders laut, die von herkömmlichen Einstellungen eines Fahrers abweichen, können einen Hinweis darauf geben, dass der Fahrer z.B. ermüdet ist und mit diesen Einstellungen gegen seine Müdigkeit angehen will. Auch in diesem Fall ist das Fahrverhalten möglicherweise als kritisch zu bewerten.

Eine erhöhte Bediendynamik, wobei unter der Bediendynamik ein Maß für die Kraft einer Betätigung eines manuell betätigbaren Bedienelements verstanden wird, lässt auf eine erhöhte Aggressivität des Fahrers schließen. Ein besonders aggressiver Fahrer neigt gegebenenfalls dazu, Sicherheitsabstände oder Geschwindigkeitsbeschränkungen nicht einzuhalten. Auch in diesem Fall ist das Fahrverhalten als kritisch zu bewerten.

Ist ein kritisches Fahrverhalten festgestellt worden, so kann dies an verschiedene Fahrzeugsysteme weitergegeben werden. Besonders vorteilhaft ist die Weitergabe an Warnsysteme, die Warnschwellen, bei denen Fahrerwarnungen ausgegeben werden, entsprechend absenken können.

Ferner ist vorteilhaft, das Benutzerprofil bei einer wiederholten Abweichung von einem gespeicherten Fahrerverhalten zu korrigieren, damit eine genaue Bestimmung eines kritischen Fahrverhaltens erhalten bleibt und nicht unnötig Warnungen ausgegeben werden.

Von Vorteil ist ferner, dass ein Kraftfahrzeug bereits mit einer Vielzahl von Stellteilen ausgerüstet ist. Informationen, die aus der Wahl der Einstellungen bzw. aus einer Häufigkeit der Einstellungsveränderungen oder der Bediendynamik resultieren, können ermittelt werden, ohne dass hierzu weitere, aufwendige Komponenten im Fahrzeug eingebaut werden müssen.

### Zeichnung

Ausführungsbeispiele der Erfindung sind in der Zeichnung dargestellt und in der nachfolgenden Beschreibung näher erläutert. Es zeigen
Figur 1 eine erfindungsgemäße Vorrichtung zur Durchführung des erfmdungsgemäßen Verfahrens zur Ermittlung eines kritischen Fahrverhaltens,
Figur 2 einen erfmdungsgemäßen Verfahrensablauf zur Ermittlung eines kritischen Fahrverhaltens.

### Beschreibung des Ausführungsbeispiels

Das erfindungsgemäße Verfahren kann in beliebigen Fahrzeugen verwendet werden. Insbesondere ist die Verwendung in Kraftfahrzeugen vorteilhaft, da diese gegebenenfalls von mehreren Benutzern verwendet werden, so dass jeweils eine personelle Zuordnung eines Benutzerprofils zu einem Fahrer eine optimale Anpassung der Erkennung eines kritischen Fahrverhaltens an den jeweiligen Fahrer ermöglicht. Zudem unterliegen Kraftfahrzeuge im Gegensatz z.B. zu Flugzeugen oder Schienenfahrzeugen keiner zentralen Überwachung, so dass kritische Fahrverhalten möglicherweise unentdeckt bleiben und sich das Risiko für den Fahrer und andere Verkehrsteilnehmer hierdurch erhöht. Im Folgenden ist das erfindungsgemäße Verfahren am Beispiel einer Anwendung in einem Kraftfahrzeug erläutert.

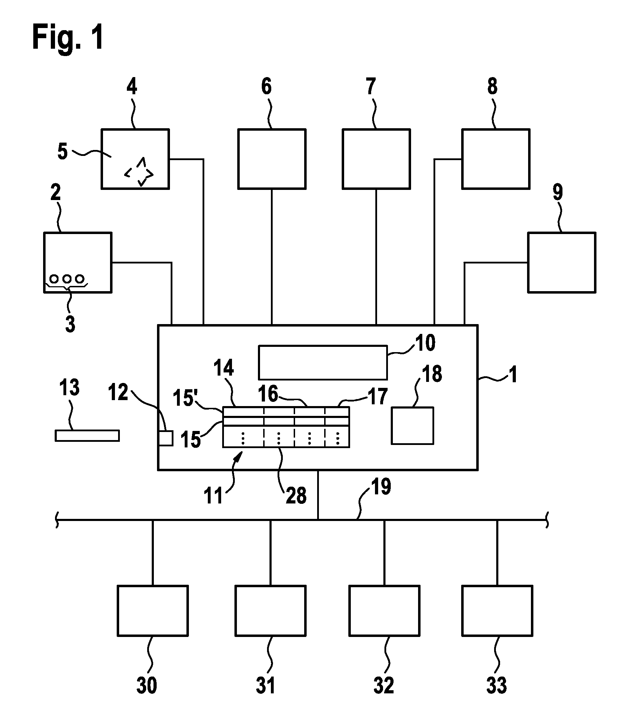

In der Figur 1 ist eine zentrale Erfassungseinheit 1 dargestellt, die zur Bestimmung des Fahrerverhaltens dient. Die Erfassungseinheit 1 ist mit den Steuerungen von verschiedenen Fahrzeugsystemen verbunden. Eine Bedienung eines Fahrzeugsystems bzw. einer Auswahl einer Fahrzeugfunktion wird an die Erfassungseinheit 1 übermittelt. Hierzu ist unter anderem ein Autoradio 2 an die Erfassungseinheit 1 angeschlossen. Das Autoradio 2 weist Drucktasten und/oder Drehregler 3 auf, die zur Auswahl eines Radioprogramms und einer Lautstärkenregelung des Autoradios 2 dienen. Ferner ist eine Sitzeinstellungseinheit 4 an die Erfassungseinheit 1 angeschlossen, wobei über eine Kreuzwippe 5 eine Sitzeinstellung durchgeführt wird. Ferner ist eine Klimasteuerung 6, eine Fenstereinstellung 7, eine Schiebedachregelung 8 und eine Pedalerieerfassung 9 an die Erfassungseinheit 1 angeschlossen. Bei der Pedalerieerfassung 9 wird das Gaspedal, das Kupplungspedal und/oder das Bremspedal erfasst. Es können weniger, aber auch noch weitere Bedieneinheiten im Fahrzeug an die Erfassungseinheit 1 angeschlossen sein.

Von den Bedieneinheiten wird mindestens eine der folgenden Größen erfasst: Häufigkeit einer Betätigung eines Bedienelements pro Zeiteinheit, Art der ausgewählten Funktion, bei der Betätigung aufgewendete Kraft. Anstelle eines jeweils einzelnen Anschlusses der Fahrzeugkomponenten bzw. Fahrzeugbedienkomponenten können diese auch über ein Bussystem an die Erfassungseinheit 1 angeschlossen sein.

Die Erfassungseinheit 1 weist eine Recheneinheit 10 auf, die die eingegebenen Daten verarbeitet. Die Recheneinheit 10 vergleicht die Daten über die Bedienung der Bedieneinheiten und damit das Bedienverhalten des Fahrers mit einem in einem Speicher 11 abgelegten Benutzerprofil. Das Benutzerprofil ist nichtflüchtig in dem Speicher 11 abgelegt. Es kann über eine Datenschnittstelle dem Speicher 11 zugeführt werden. So ist es z.B. möglich, eine Einstecköffnung 12 für eine Datenträgerkarte 13, z.B. eine Karte mit einem aufgebrachten Speicherchip, an der Erfassungseinheit 1 oder an einer anderen geeigneten Stelle im Fahrzeug mit Datenkontakt zu der Erfassungseinheit 1 vorzusehen.

Die Erfassungseinheit 1 kann als eine Hardware-Baueinheit ausgeführt sein, die gegebenenfalls sogar ein eigenes Gehäuse aufweist. Es ist jedoch auch möglich, die Erfassungseinheit 1 als eine Software-Komponente auszuführen, die zu den angegebenen, übrigen Systemen, entsprechende Software-Schnittstellen aufweist.

In dem Speicher 11 sind die einzelnen Fahrzeugfunktionen über die das Benutzerprofil eine Aussage trifft, in einer ersten Spalte 14 abgelegt. In weiteren Zeilen 15, 15' befmden sich hierbei zu den mehreren Benutzerfunktionen abgelegte Werte. In einer zweiten Spalte 28 ist ein Wert für die Bedienhäufigkeit einer Fahrzeugfunktion abgelegt. In einer dritten Spalte 16 sind bevorzugte Auswahlen und Parameter für die Fahrzeugfunktion abgelegt. In einer vierten Spalte 17 ist eine typische Kraft für die Bedienung eines jeweils zugeordneten Bedienelements abgelegt. Stellt die Recheneinheit 10 Abweichungen zwischen den gemessenen Werten der Fahrzeugbedienung und dem in dem Speicher 11 abgelegten Benutzerprofil fest, so wird diese Abweichung in einem Abweichungsspeicher 18 abgelegt. Tritt die Abweichung häufiger auf, so wird das Benutzerprofil in dem abweichenden Eintrag entsprechend in Richtung der Abweichung korrigiert. Auch der Abweichungsspeicher 18 ist bevorzugt als ein nichtflüchtiger Speicher ausgeführt, so dass auch nach Abstellen des Fahrzeugs die Abweichungen zur Verfügung stehen. Die Abweichungen werden erst gelöscht, wenn entweder ein bestimmter Zeitraum seit ihrer Eintragung vergangen ist oder der in dem Speicher 11 gespeicherte Wert in die entsprechende Richtung korrigiert wurde, die die Abweichung vorgibt. In einer bevorzugten Ausführungsform ist es dabei möglich, für jeden Fahrer ein eigenes Benutzerprofil des Bedienverhaltens anzulegen, das nach einer geeigneten Identifizierung eines Benutzers ausgewählt und von der Recheneinheit 10 verarbeitet wird.

In einer besonderen Ausführungsform ist es auch möglich, dass in dem Benutzerprofil des Bedienverhaltens lediglich Abweichungen von in einer weiteren, nicht gezeigten Speichereinheit vorgegebenen Standardwerten abgelegt werden müssen. Hierdurch kann Speicherplatz gespart werden. Insbesondere für den Fall, dass ein Fahrer verschiedene Funktionen nicht nutzt, ist eine Speicherplatzreduzierung möglich. Bei einer Speicherung auf einer Speicherkarte, die auch in andere Fahrzeuge mit einer erfindungsgemäßen Einrichtung übertragen werden kann, kann somit eine fahrzeugspezifische Anpassung erfolgen. So ist z.B. bei der Fahrt eine größere Lautstärkeneinstellung eines Radios in einem Fahrzeug mit höheren Windgeräuschen anzunehmen, als in einem Fahrzeug, in dessen Innenraum es im Allgemeinen leise ist. Somit kann das Benutzerprofil bei einer Übertragung auf ein anderes Fahrzeug an das andere Fahrzeug unmittelbar angepasst werden.

Die Kraftmessung bei einer Bedienung, z.B. bei einer Betätigung des Signalhorns des Fahrzeugs oder bei der Radiobedienung, erfolgt vorteilhaft durch Stellteile, die entweder eine beschleunigungsempfindliche oder eine kraftempfindliche Sensorik aufweisen. Eine Ausführung ist z.B. möglich mit resistiven oder auf Piezotechnik basierenden Sensoren zur Registrierung wirkender Kräfte. Diese sind an den Stellteilen angeordnet oder in diese eingebracht und ermitteln bei einer Betätigung durch einen Benutzer die auf das Stellteil wirkende Kraft. Die Information über die bei der Bedienung aufgewendete Kraft wird an die Erfassungseinheit 1 weitergeleitet.

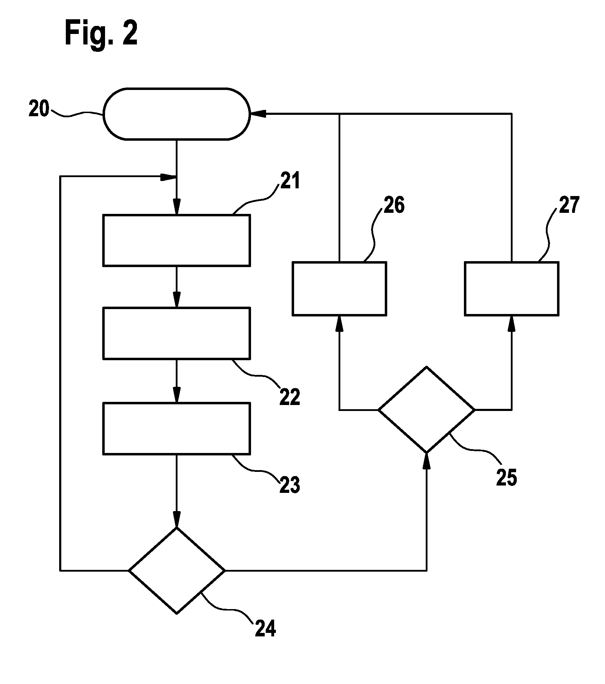

Eine erfindungsgemäße Verarbeitung zur Ermittlung eines kritischen Fahrerverhaltens ist in der Figur 2 dargestellt. Ausgehend von einem Initialisierungsschritt 20 beginnt eine Überwachung des Fahrerverhaltens. In einer bevorzugten Ausgestaltung beginnt eine Überwachung des Fahrerverhaltens erst etwa fünf Minuten nach einem Starten des Fahrzeugs bzw. erst dann, wenn das Kühlwasser Betriebstemperatur erreicht hat. Damit wird vermieden, dass Anpassungen der Fahrzeugfunktionen zu Beginn einer Fahrt an die aktuelle Fahrsituation eine Beurteilung des Fahrerverhaltens verfälschen. Z.B. wird im Winter zum Enteisen einer Frontscheibe eine extreme Richtung der Lüftung auf die Frontscheibe bei maximaler Heizleistung gewählt. Aus einer derartigen Einstellung kann jedoch kein Rückschluss auf ein Fahrerverhalten geschlossen werden. Gleiches gilt z.B. bei einem Fahrzeug, das in der Sonne abgestellt wurde und das zunächst durch eine geeignete Einstellung der Klimaregelung heruntergekühlt werden soll.

An den Initialisierungsschritt 20 schließt sich ein erster Erfassungsschritt 21 an. In dem ersten Erfassungsschritt 21 wird die Anzahl von durchgeführten Bedienungen seit der letzten Erfassung bei denjenigen Fahrzeugkomponenten abgefragt, die diese Daten bereitstellen. In einem zweiten anschließenden Erfassungsschritt 22 wird in gleicher Weise eine Bedienauswahl abgefragt, d.h. welche Funktion in diesem Zeitraum ausgewählt wurde. In einem anschließenden dritten Erfassungsschritt 23 wird abgefragt, wie groß eine Bedienkraft für eine jeweilige, einzelne Bedienung war, die seit der letzten Abfrage erfolgt ist. Die so gewonnen Größen Bedienfrequenz, Einstellungswünsche und Bediendynamik werden jeweils mit den in den Spalten 28, 16, 17 abgelegten Werten verglichen. Hierzu ist es gegebenenfalls noch erforderlich, aus der Anzahl der Bedienungen in Bezug zu der Erfassungsdauer die Bedienfrequenz zu bestimmen.

Für ein Autoradio kann z.B. als Bedienfrequenz eine Bedienung von einem Benutzereingriff pro Minute als Grenzwert vorgegeben sein. Als Funktionsauswahl können ein bestimmter Lautstärkenpegelbereich und/oder eine bestimmte Senderwahl vorgegeben sein. Als Grenzwert für eine Kraft auf ein Bedienelement kann z.B. die Kraft von 100 Newton vorgegeben sein. Für eine Klimaregeleinrichtung kann z.B. eine Betätigung in drei Minuten, eine Temperaturwahl von 22° und eine Bedienkraft von 80 Newton vorgesehen sein. Diese Werte sind entweder durch einen Benutzer eingestellt oder zunächst werksseitig vorgegeben, werden jedoch während der Benutzung an die Wünsche eines Benutzers angepasst.

Ferner kann z.B. ein typischer Wert für einen Tempomaten im Rahmen einer Abstandsregeleinrichtung vorgegeben sein, während in diesem Fall kein Bediendruck und keine Bedienfrequenz miterfasst wird. Ferner ist es möglich, z.B. bei der Betätigung des Schiebedachs lediglich die Bedienhäufigkeit zu erfassen, während bei einer Betätigung des Fensterhebers sowohl die Bedienhäufigkeit als auch die Bedienwahl, z.B. halb geöffnetes oder ganz geöffnetes Fenster, mit erfasst werden. Bezüglich der Pedalerie wird vorteilhaft sowohl die Bedienfrequenz, als auch die Bediendynamik erfasst. Insbesondere werden dabei Gaspedal und Bremse überwacht.

In einem an den dritten Erfassungsschritt 23 anschließenden ersten Prüfschritt 24 werden die Abweichungen bzw. Grenzwertüberschreitungen der ermittelten Benutzerdaten von dem gespeicherten Benutzerprofil ermittelt. Bevorzugt ist eine einzige Abweichung in einem gespeicherten Bedienverhalten noch nicht dafür ausreichend, dass die Erfassungseinheit ein kritisches Fahrverhalten feststellt. Bevorzugt sind hier zumindest drei verschiedene Abweichungen in einem Erfassungszeitraum erforderlich. Gegebenenfalls können der Erfassungseinheit 1 bestimmte Korrelationsvorschriften vorgegeben werden, wobei eine bestimmte Kombination von Abweichungen erfüllt sein muss. Z.B. führt ein geöffnetes Fenster mit zugleich laut eingestelltem Radio zur Ermittlung eines kritischen Fahrverhaltens, nämlich zur Festestellung einer Müdigkeit eines Fahrers. Wird in dem ersten Prüfschritt 24 keine solche Abweichung festgestellt, so werden nach einem vorgegebenen Zeitraum, z.B. nach einer Minute, die Erfassungsschritte wiederholt. Wird in dem ersten Prüfschritt 24 jedoch festgestellt, dass eine hinreichende Anzahl von Abweichungen vorliegt, so wird zu einem zweiten Prüfschritt 25 verzweigt. In dem zweiten Prüfschritt 25 wird geprüft, ob diese Abweichung bereits in der Vergangenheit aufgetreten ist. Hierzu werden die ermittelten Abweichungen mit den in dem Abweichungsspeicher 18 abgelegten Abweichungen verglichen. Ist die Abweichung bereits mehrfach aufgetreten, z.B. bereits bei einer vorherigen Fahrt oder seit einem längeren Zeitraum, z.B. einer Stunde, so wird zu einem Korrekturschritt 26 verzweigt, in dem das gespeicherte Benutzerprofil durch eine Mittelung mit den erfassten Abweichungen korrigiert wird. Wird in dem zweiten Prüfschritt 25 jedoch erfasst, dass solche Abweichungen bisher nur selten oder noch gar nicht aufgetreten sind, so wird zu einem Ausgabeschritt 27 verzweigt, in dem die Abweichung in den Abweichungsspeicher 18 geschrieben wird. Zudem gibt die Erfassungseinheit 1 ein entsprechendes Hinweissignal auf einen Datenbus 19 aus, an den wiederum eine Vielzahl von Fahrzeugkomponenten angeschlossen ist. In einer ersten Ausführungsform wird von der Erfassungseinheit lediglich ausgegeben, dass ein kritisches Fahrverhalten vorliegt. In einer weiteren Ausführungsform können der Recheneinheit 10 jedoch auch entsprechende Bewertungsdaten zur Verfügung stehen, anhand der die Recheneinheit 10 ermitteln kann, um welches kritisches Fahrverhalten es sich möglicherweise handelt. Bei einer häufigen Betätigung der Pedalerie könnte dies z.B. ein aggressives Fahren sein. Bei einer häufigen Bedienung des Radios zusammen mit einem geöffneten Fenster oder einer besonders kalt eingestellten Klimaanlage könnte dies z.B. eine Ermüdung des Fahrers sein.

In dem hier dargestellten Ausführungsbeispiel ist eine Einheit 30 zum abstandsgeregelten Folgefahren, eine Spurverlassenswarnung 31, eine Einparkvorrichtung 32 und ein Anzeigeinstrument 33 zum Empfangen der Hinweise auf ein kritisches Fahrverhalten an den Datenbus 19 angeschlossen. Die Vorrichtung zum abstandsgeregelten Folgefahren wählt bei einem ermittelten kritischen Fahrerverhalten einen größeren Abstandswert, der zu einem vorausfahrenden Fahrzeug eingehalten wird. Die Spurverlassenswarnung 31 gibt bereits früher, also bereits bei einer Annäherung an seitliche Fahrbahnbegrenzungen oder bei einem geringen Überschreiten der seitlichen Fahrbahnbegrenzungen Warnungen aus. Die Einparkvorrichtung 32 gibt Warnungen bereits bei größeren Abstandswerten zu Hindernissen aus. In dem Anzeigeinstrument 33 wird in einer bevorzugten Ausführungsform ein entsprechendes Warnfeld hinterleuchtet, das den Fahrer auf ein kritisches Warnverhalten hinweist, z.B. mittels der Darstellung eines Warndreiecks. Mit einer entsprechenden Anzeige erhält der Fahrer auch eine Rückmeldung darüber, dass sein Fahrverhalten möglicherweise kritisch ist und er gegebenenfalls eine Pause einlegen sollte.

## Patentansprüche

1. Verfahren zur Ermittlung eines kritischen Fahrerverhaltens, wobei ein Bedienverhalten eines Fahrers ausgewertet und mit einem gespeicherten Benutzerprofil derart verglichen wird, dass bei einer Abweichung des Bedienverhaltens von dem gespeicherten Benutzerprofil ein kritisches Fahrerverhalten ermittelt wird.

2. Verfahren nach Anspruch 1, **dadurch gekennzeichnet, dass** zur Bestimmung des Bedienverhaltens eine Bedienhäufigkeit und/oder eine Bedienungsauswahl und/oder eine Bediendynamik ausgewertet wird.

3. Verfahren nach einem der vorherigen Ansprüche, **dadurch gekennzeichnet, dass** sich wiederholende Abweichungen von dem Benutzerprofil zur Korrektur des Benutzerprofils ausgewertet werden.

4. Verfahren nach einem der vorherigen Ansprüche, **dadurch gekennzeichnet, dass** ein kritisches Fahrerverhalten zur Absenkung von Warnschwellen an mindestens ein Warnsystem im Fahrzeug weitergegeben wird.

5. Verfahren nach einem der vorherigen Ansprüche, **dadurch gekennzeichnet, dass** eine Radiobedienung, eine Klimasteuerung, eine Fenstersteuerung und/oder eine Sitzsteuerung ausgewertet wird.

6. Vorrichtung zur Durchführung des Verfahrens nach einem der vorherigen Ansprüche, **gekennzeichnet durch** eine zentrale Erfassungseinheit (1) zur Erfassung einer Vielzahl von Bedienvorgängen, mit einem Speicher (11) zur Speicherung des Benutzerprofils und mit einer Schnittstelle (19) zur Ausgabe eines kritischen Fahrerverhaltens an Fahrzeugsysteme.

7. Vorrichtung nach Anspruch 6, **dadurch gekennzeichnet, dass** auf Bedienelemente wirkende Kräfte bei der Vielzahl von Bedienvorgängen an die zentrale Erfassungseinheit (1) übermittelbar sind.

8. Bedieneinheit zum Anschließen an eine zentrale Erfassungseinheit (1) zur Erfassung einer Vielzahl von Bedienvorgängen, die zur Durchführung eines Verfahren nach einem der Ansprüche 1 bis 6 dient, wobei das Bedienelement (3, 5, 9) eine Vorrichtung zur Kraftmessung einer bei dem Bedienvorgang auf das Bedienelement (3, 5, 9) ausgeübten Kraft aufweist.
